(19) Europäisches Patentamt
European Patent Office
Office européen des brevets

(11) **EP 3 296 658 B1**

(12) **EUROPEAN PATENT SPECIFICATION**

(45) Date of publication and mention
of the grant of the patent:
**03.03.2021 Bulletin 2021/09**

(51) Int Cl.:
*F24F 12/00* $^{(2006.01)}$    *F24F 7/06* $^{(2006.01)}$
*F24D 3/18* $^{(2006.01)}$

(21) Application number: **17190349.5**

(22) Date of filing: **11.09.2017**

(54) **EXHAUST AIR HEAT PUMP APPARATUS AND METHOD OF PROCESSING EXHAUST AIR**

ABLUFTWÄRMEPUMPENVORRICHTUNG UND VERFAHREN ZUR VERARBEITUNG VON ABLUFT

APPAREIL DE POMPE À CHALEUR D'AIR D'ÉCHAPPEMENT ET PROCÉDÉ DE TRAITEMENT DE L'AIR D'ÉCHAPPEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2016 FI 20165696**

(43) Date of publication of application:
**21.03.2018 Bulletin 2018/12**

(73) Proprietor: **Scandesco Energy Tech Oy**
**01900 Nurmijärvi (FI)**

(72) Inventors:
• **Saarinen, Kari**
**01900 Nurmijärvi (FI)**
• **Tiermas, Marko**
**01900 Nurmijärvi (FI)**

(74) Representative: **Laine IP Oy**
**Porkkalankatu 24**
**00180 Helsinki (FI)**

(56) References cited:
EP-A1- 2 306 107          CA-A1- 2 736 085
DE-T5-112014 000 527      DE-T5-112014 001 194

## Description

## Field of the Invention

The invention relates to exhaust air heat pump (EAHP) technology. In particular, the invention relates to EAHP apparatuses and exhaust air heat recovery methods. EAHP apparatuses comprise an inlet channel for exhaust indoor air, an outlet channel for discharge air, and a heat pump unit for recovering heat from the exhaust indoor air.

## Background of the Invention

Exhaust air heat pump systems are used to recover heat from indoor air that is exhausted and discharged from a building through ventilation. Modern efficient systems are active systems, which employ a heat pump that is able to transfer heat from the indoor air back to the building, improving energy efficiency of the system. In centralized air-to-air heat recovery ventilation (HRV) or air conditioning systems, the heat is transferred to fresh replacement air taken in by the HRV system and delivered to the building. In decentralized replacement air exhaust air heat pump systems the heat is often transferred to a liquid-state heating medium used e.g. in domestic hot water (DHW) and/or central heating system of the building. In decentralized replacement air systems, there are other replacement air channels in the building, such as fresh air channels on walls or windows of the building.

Optimizing the function of an active heat recovery apparatus is a complex task. One example of centralized HRV systems is presented in WO 2011/077007, which discloses one related apparatus with an arrangement to enhance its function. The apparatus comprises an exhaust air duct, a discharge duct, a fresh air duct and an inlet air duct. There is also provided a first evaporator-condenser unit adapted to the discharge air duct and a second evaporator-condenser unit adapted to the inlet air duct. There is also a bypass channel and flow control means between the fresh air duct and the discharge air duct, prior to the first evaporator-condenser unit in the flow direction of the discharge air duct and prior to the second evaporator-condenser unit in the flow direction of the inlet air duct. The bypass channel and flow control means are adapted to pass fresh air from the fresh air duct to the discharge air duct in order to enhance the function of the evaporator-condenser unit. Particular control and optimization challenges are faced in decentralized replacement air EAHP systems, because the flow of replacement air to the building is not under direct control of the HRV system but the amount of indoor air flowing through the heat pump must be high enough for heat to be efficiently recovered. For example, in many-apartment houses with a common EAHP, adjusting the air flow rates in replacement and/or exhaust air channels in a single apartment affects the balance of the system and also the ventilation of other apartments in the building. This can lead to situations where the EAHP is far from its optimal point of operation and/or some apartments are facing problems relating to indoor air quality, temperature or ventilation. Another problem relating to decentralized replacement air EAHP systems relates to their relatively low coefficient of performance (COP) in some situations.

CA 2 736 085 discloses a system for cooling air in buildings and producing water according to the preamble of independent claims 1 and 11. The system utilizes a heat pump. Further system relating to air conditioning of buildings and heat pumps are described in DE 11 2014 000527, DE 11 2014 001194 and EP 2 306 107. Thus, there is a need for improved EAHP systems.

## Summary of the Invention

It is an aim of the invention to provide a novel exhaust air heat pump apparatus with improved controllability and/or efficiency. A particular aim is to provide an EAHP apparatus, which has improved controllability and/or efficiency when installed in many-apartment buildings having decentralized replacement air intake system. It is also an aim to provide a related method for recovering energy in ventilation systems.

According to one aspect, the invention provides an exhaust air pump apparatus comprising a first inlet channel for exhaust indoor air, an outlet channel for discharge air, and a heat pump unit comprising an air intake connected to the first inlet channel and air output connected to the outlet channel, the heat pump unit being capable of recovering heat from air provided to said air intake, whereby the discharge air is produced at the air output. The apparatus further comprises a recirculation channel capable of conveying part of air at the output of the heat pump back to the air intake of the heat pump unit mixed with the exhaust indoor air and a second inlet channel for feeding outside air to the inlet of the heap pump mixed with the exhaust indoor air, and optionally also with the recirculated air. Thus, part of the air fed to the heat pump for heat recovery comprises non-recirculated, i.e., "fresh" exhaust air and part of the air comprises recirculated air, outdoor air, or both.

The present exhaust air process comprises recovering heat from exhaust air of a building. Thus, the method comprises exhausting air from the building to an air mixing zone and feeding air from the air mixing zone through a heat pump comprising an air intake and an air output and being adapted to recover heat from provided to the intake and to provide secondary air, i.e. cooled air, respectively, at the output of the heat pump. A portion of the secondary air is recirculated back to the mixing zone and/or outdoor air is fed to the mixing zone, where the recirculated air and/or outdoor air is mixed with the exhausted air before feeding to the air intake of the heat pump.

More specifically, the invention is characterized by what is stated in the independent claims.

The invention offers significant advantages. The possibility to recirculate air as well as to intake outdoor air increases the control possibilities of the apparatus, as not only the exhaust air can be used as a heat source but also the outdoor air and air having passed through the heat pump. In addition, the apparatus is more immune to varying ventilation conditions of the building. For example, if residents in some part of the building close their exhaust or replacement air valves, the missing air in the EAHP apparatus can be replaced with recirculated air and/or outdoor air without affecting other parts of the building. In addition, as heat pumps require a certain amount of air flowing through them in order to operate efficiently, in some conditions, it may be beneficial to recirculate part of air back to the heat pump and/or to add outdoor air to the air flow passing the heat pump to maintain high COP, even though the recirculated air, and often also outdoor air, is cooler than the "fresh" exhaust air. The amount of recirculated air and/or outdoor air can be e.g. 1...50% of the total volume flow passing the heat pump unit. The possibility to choose between recirculated air and outdoor air, or to use both of these simultaneously, is beneficial as it makes it possible to find optimal mode of driving of the apparatus in different outdoor temperatures, for example.

The dependent claims are directed to selected embodiments of the invention.

According to one embodiment, the apparatus comprises means for adjusting mixing ratio of exhaust indoor air, outdoor air and recirculated air. Typically, the apparatus can be driven in a mode of operation where a significant portion, in particular at least 25%, typically at least 50%, such as 50-95% of mixed air comprises exhaust indoor air, in terms of volume flow. The rest comprises outdoor air, recirculated air, or both.

According to one embodiment, the recirculation channel comprises a first adjustable valve (recirculation valve) for controlling the amount of air recirculated to the air intake of the heat pump unit. According to one embodiment, the second inlet channel for outdoor air comprises a second adjustable valve (outdoor air valve) for controlling the amount of outdoor air provided to intake of the heat pump unit through the second inlet channel. There may also be an adjustable discharge valve in the discharge channel of the apparatus, whereby the positions of the recirculation valve, outdoor air valve and discharge valve together determine the mixing ratio of the mixed air flow fed to the heat pump.

In some embodiments, there is provided a mixing zone, such as a mixing chamber, upstream of the heat pump. The mixing zone is adapted to mix the exhaust indoor air with the recirculated discharge air and/or the outdoor air before feeding to the intake of the heat pump. The proportions of air to be mixed are dependent on the positions of the outdoor air valve and the recirculation valve, and optionally the discharge valve.

Embodiments with both adjustable recirculation channel and adjustable outdoor air inlet channel, and a control system for adjusting them, are particularly advantageous. They allow for adjusting the flows in varying ambient air temperature conditions and ventilation configurations, and therefore optimization of COP of the heat pump.

According to one embodiment, there are provided one or more temperature and/or air flow sensors within the apparatus and a control unit adapted to control the adjustable valves of the apparatus based on measurement data provided by the sensors. The control unit may be adapted to control the valves such that in a first mode of operation at least a portion of air provided to the mixing zone comprises recirculated air and in a second mode of operation at least a portion of air provided to the mixing zone comprises outdoor air. In typical configurations, at least a portion of the air provided to mixing zone comprises non-recirculated exhaust air.

For example, the control unit may be adapted to control the flows of recirculated air and outdoor air to the mixing zone based on temperature and/or air flow measurements such that a significant portion, preferably at least 25%, such as 25 ... 95%, in particular 50...95% of air in the mixing zone is air exhausted directly from the building, and the remaining portion is recirculated air and/or outdoor air in proportion 0:100... 100:0.

According to one embodiment, the mixing zone comprises at least one mesh of metal through which the air is adapted to flow. This evens out temperature differences within the flow and improves the energy efficiency of the heat pump.

According to one embodiment, the apparatus is a decentralized replacement air exhaust air heat pump apparatus, wherein the heat pump unit is adapted to recover heat to a liquid circuit connectable to heat distribution system of a building. Thus, there are no replacement air channels in the apparatus that would be suitable for conducting fresh outdoor air to the building. Instead of that, the replacement air channels form a separate functional system in the building. In particular, the replacement air channels can be distributed on outer walls and/or windows of different rooms of the building.

According to one embodiment, the heat pump unit comprises a single heat pump. There may also be a cascade of two of more heat pumps, whereby said recirculation channel is arranged to convey air from air output of the last heat pump to air input of the single heat pump or the first heat pump of the cascade.

According to one embodiment, the apparatus comprises an exhaust fan adapted to transfer the exhaust air from the building to the mixing zone.

According to one embodiment, the heat pump unit is provided with one or more heat pump fans for conveying air through the heat pump unit, and wherein said conveying of air through the air recirculation channel is adapted to occur solely due to air pressure caused by said heat pump fan(s). Flow of recirculated air can be adjusted by means of a valve in the recirculation channel in the presence of said pressure. This makes the apparatus very cost effective and maintenance-free.

In some embodiments, there are only two fans or fan groups in the apparatus, i.e., an exhaust air fan (group) and heat pump fan (group), using which all the air flows are made to occur as determined by valves in respective channels.

According to one embodiment, heat is recovered by the heat pump to a central heating water and/or domestic water reservoir of the building.

In a typical installation environment, the exhausting comprises collecting air from at least ten different rooms of the building, and providing at least part of replacement air to said room via decentralized replacement air channels, i.e. outside the present apparatus. The present invention is most beneficial in many-apartment houses with at least 10 apartments, such as 10 - 100 apartments, a centralized exhaust ventilation system, and decentralized replacement air system (many replacement air intake points). In such buildings, the ventilation conditions are continuously changing due to changing of ambient conditions and actions of the residents of the building, whereby improved controllability of ventilation and heat recovery is needed without sacrificing performance too much.

Next, embodiments of the invention and advantages thereof are discussed in more detail with reference to the attached drawings.

**Brief Description of the Drawings**

Fig. 1 shows schematically an AEHP apparatus according to one embodiment of the invention.

Figs. 2A and 2B show in more detail the construction of an EAHP apparatus as side and top views, respectively, according to one embodiment.

Figs. 3A and 3B illustrate in two different views a temperature evening assembly.

Fig. 4 depicts a building provided with an EAHP apparatus according to one embodiment of the invention.

Fig. 5 illustrates a heat recovery method according to one embodiment of the invention.

Fig. 6 shows an alternative EAHP apparatus, containing an additional heat transfer for efficient flow control and heat recovery.

**Detailed Description of Embodiments**

In the following description, embodiments of exhaust air heat pump apparatus suitable for recovering heat is described. Optimization of heat pump efficiency in varying conditions is possible.

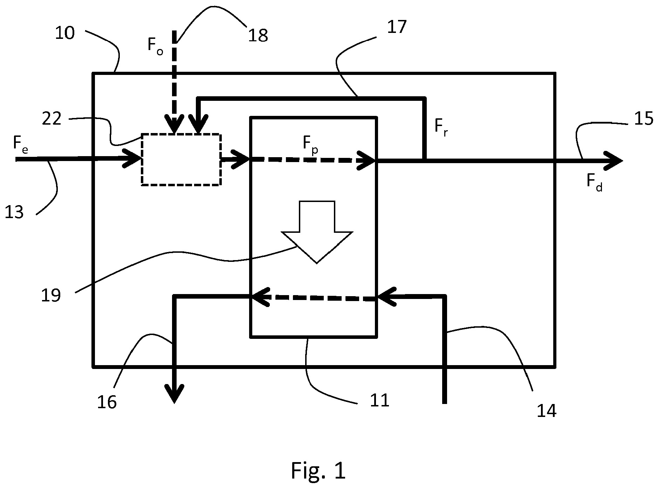

With reference to Fig. 1, the exhaust air heat pump apparatus 10 comprises a heat pump 11, which forms the heat recovery core of the apparatus 10. There is provided a first inlet channel 13 for exhaust indoor air flow $F_e$. The inlet channel 13 is connected to a mixing zone 22. The mixing zone 22 is further connected to air intake of the heat pump 11 for providing a pump flow $F_p$ through the pump 11. In the heat pump 11, a heat flow 19 is formed from pump flow $F_p$ to a liquid circuit, comprising a liquid inlet 14 and liquid outlet 16. There is also provided an outlet channel 15 to outdoors for discharge air flow $F_d$ passing the heat pump. However, there is provided a recirculation channel 17 for directing part of the air passing the heat pump 11, i.e. recirculation flow $F_r$, back to the mixing zone 22. Thus, when the recirculation channel 17 is in use, the pump flow $F_p$ is a sum of exhaust air flow $F_e$ and recirculation flow $F_r$.

There is also provided a second inlet channel 18 for outdoor air flow $F_o$. Also this inlet is connected to the mixing zone 22, adding a third potential sum component to the pump flow $F_p$, namely the outdoor flow $F_o$.

The apparatus can be used in different modes of operation. In one mode, the pump flow $F_p$ essentially consists of the exhaust flow $F_e$, recirculation flow $F_r$ and outdoor air flow $F_o$ in a chosen mixing ratio. In another mode, the pump flow $F_p$ essentially consists of the exhaust flow $F_e$ and recirculation flow $F_r$ in a chosen mixing ratio. In still another mode, the pump flow $F_p$ essentially consists of the exhaust flow $F_e$ and outdoor air flow $F_o$ in a chosen mixing ratio. In all cases, the exhaust flow $F_e$ preferably forms at least 25%, in particular at least 50% of the total pump flow $F_p$ in terms of volume flow.

The mixing zone 22 in front of the heat pump 11 is used to even out temperature and pressure differences in the various flows such that the heat pump flow $F_p$ is as homogeneous as possible and the pump 11 will operate optimally. The mixing zone 22 may comprise a chamber with a volume sufficient for the air flows to mix. In addition, there may be provided additional temperature evening means, such as a stack of metal wires or meshes that facilitate evening out of temperature differences.

According to one embodiment, the mixing zone is adapted to even out the temperature such that in the mixed air flow fed to the heat pump temperature unevenness, i.e. maximum temperature difference between different cross-sectional points of the flow, is at maximum half, in particular at maximum a quarter, of the maximum difference between temperatures of the incoming flows.

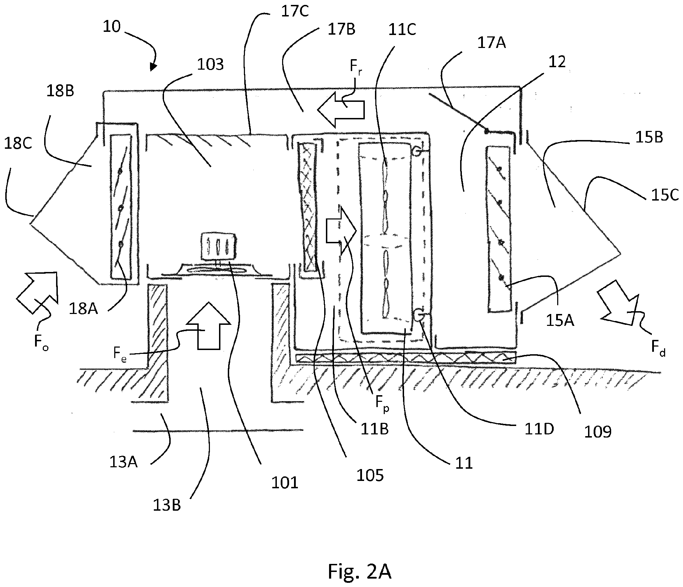

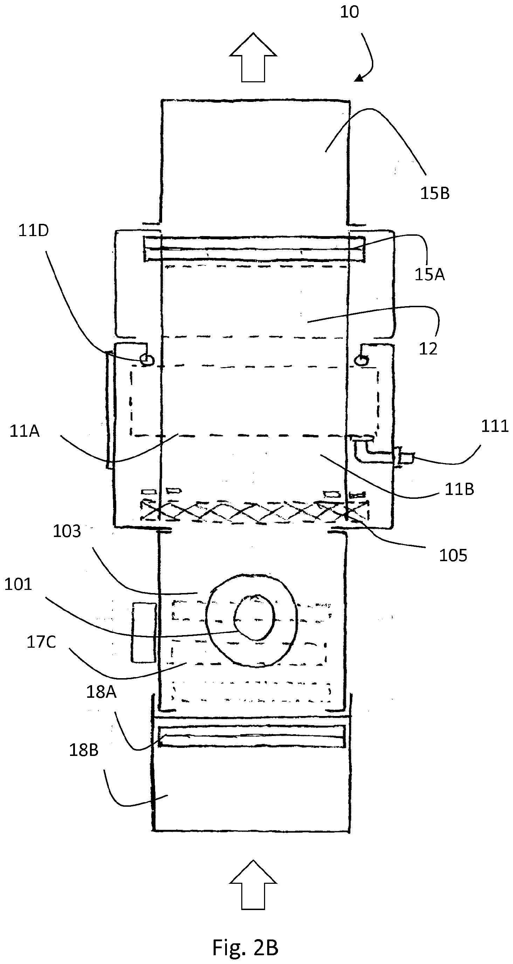

Figs. 2A and 2B show an exemplary structure of the exhaust air heat pump apparatus 10 installed on a roof of a building. In the exemplary configuration, an insulation layer 109 is provided between the roof and the apparatus 10 for reducing transfer of vibrations. The exhaust air is provided through ventilation channels 13A from different parts of the building to a common collector chamber 13B. An exhaust fan 101 causes an underpressure that causes the exhaust air to enter a mixing chamber 103 of the apparatus. Between the mixing chamber 103 and the heat pump 11, there is provided a temperature evening assembly 105 through which the air flow passes on its way to an intake chamber 11B of the heat pump 11. One or more heat pump fans 11C cause the air to pass the heat pump. The heat pump flow channel may secured with one or more seal elements 11D that ensure that all air goes through heat transfer zone (not specifically shown) of the heat pump 11. The heat pump 11 comprises also connectors 111 for liquid circuit to which the heat is recovered.

Air exiting the heat pump 11 is directed to a circulation chamber 12 from which there are two exits. One of the exist leads to the ambient air space through an adjustable discharge valve 15A, optionally via a discharge chamber 15B. The discharge chamber 15B is formed by a weather shield 15C preventing water or snow from entering the apparatus. The other exit leads to a recirculation channel 17B through an adjustable recirculation valve 17A.

The recirculation channel 17B leads to the mixing chamber 103 through optional recirculation air grate 17C. In the described way, the recirculation flow $F_r$ is controlled by the positions of the valves 15A, 17A without any additional fans. Although herein presented as to separate components, valves 15A, 17A can also be understood and, if desired, also physically implemented as a single discharge/recirculation valve.

The exemplary apparatus comprises also the possibility to mix fresh outdoor air to the pump flow $F_p$. For this purpose, there is provided an outdoor air intake valve 18A, which, when open, allows ambient outdoor air flow $F_o$ to enter the mixing chamber 103 due to pressure caused by the pump fan 11C. The ambient air is taken from an outdoor air intake chamber 18B defined by a weather shield 18C. In the mixing chamber 103, the oudoor air is mixed with the exhaust air and recirculated air before feeding to the intake chamber 11B of the heat pump 11. The intake air temperature of the heat pump is thus determined by the temperatures and magnitudes of the exhaust, recirculation and oudoor air flows.

There may be provided a control unit (not shown) functionally connected to the valves 15A, 17A, 18A. The control unit can be configured to drive the apparatus selectively into a first mode of operation, where only outdoor air is mixed with exhaust air, into a second mode of operation, where only recirculated air is mixed with exhaust air, and optionally into a third mode of operation, where both outdoor air and recirculated are mixed with exhaust air before feeding to the heat pump.

There may be provided one or more temperature sensors (not shown) in the collector ventilation channel 43 (for measuring the temperature of the exhaust air flow), recirculation channel 17B (recirculation flow), outdoor air intake chamber 18B (outdoor flow) and/or the heat pump unit (heat pump flow). The sensors are functionally connected to the control unit to provide input data for a control algorithm running therein.

The heat pump may comprise any exhaust air heat pump known *per se*, preferably configured to recover heat form air to a liquid medium.

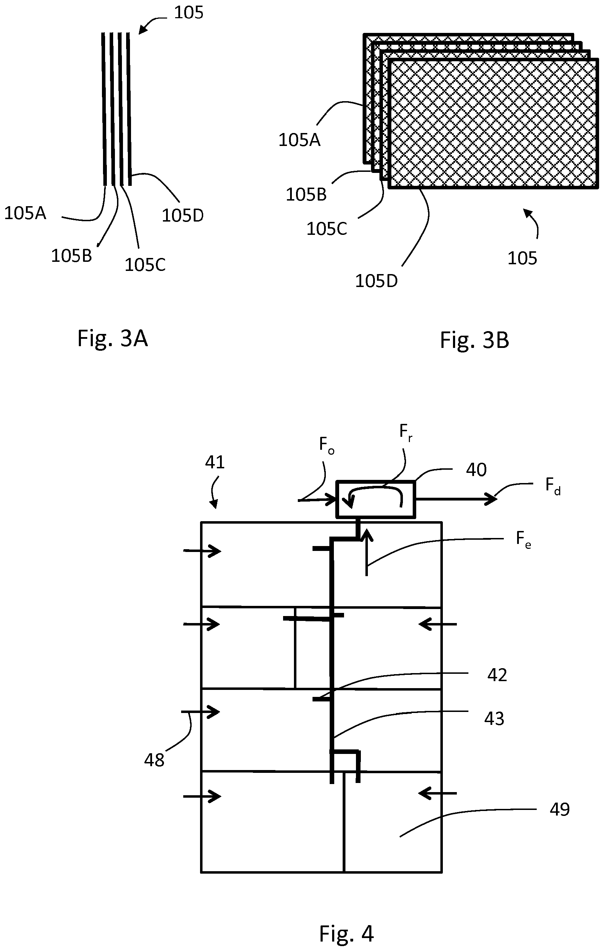

Figs. 3A and 3B show an exemplary temperature evening element 105, which comprises stack of a plurality, in this case four, metal meshes, such as aluminum meshes that are thermally well conductive. This kind of an element 105 is efficient and easy to keep clean by e.g. water jet, and allows for a filterless apparatus design.

Valves 15A, 17A, 18A may comprise plate valves driven by motors controlled by a control unit (not shown).

Fig. 4 shows a many-apartment building 41 with the present apparatus 40 installed on top of it. The building comprises ventilation channels 42 in each apartment and/or room 49 thereof, and a collector ventilation channel 43, that are designed to provide an exhaust air flow $F_e$ which is directed to the exhaust air channel of the apparatus 40 operating in the way described above. Replacement air flows to the apartments/rooms 49 of the building are denoted with numeral 48.

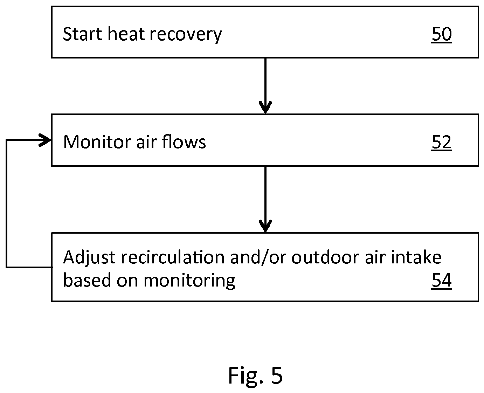

Fig. 5 illustrates the present heat recovery method. The heat recovery process is started in step. After that, magnitudes of air flows and/or temperatures thereof are measured and input to a monitoring and control system in step 52. The monitoring and control system runs an algorithm based on which the proportions of recirculation air flow $F_r$ and the outdoor air flow $F_o$ of the total pump flow $F_p$ are adjusted using suitable control electronics and mechanics.

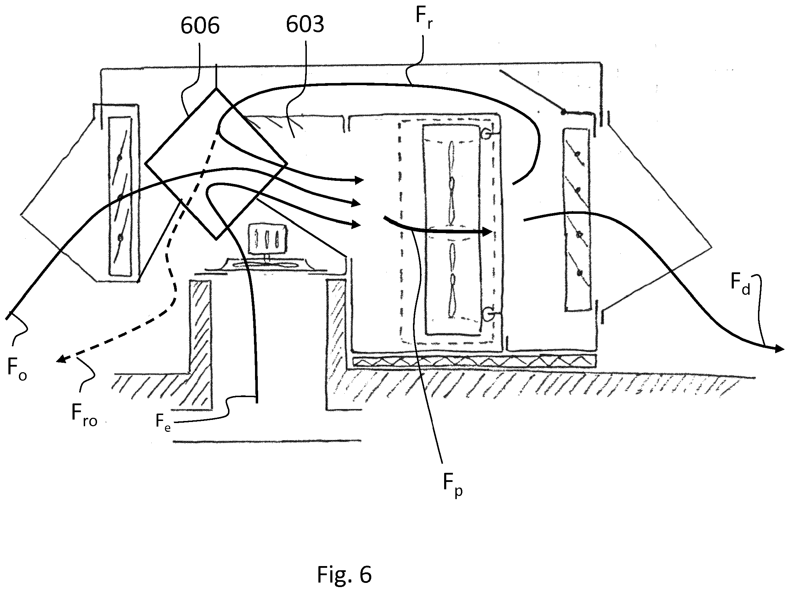

Fig. 6 shows a variation of the apparatus shown in Figs 2A and 2B. The apparatus comprises the same basic components, but has a heat transfer element 606 provided in or in front of the mixing chamber 603.

The heat transfer element 606 is placed in front of the heat pump unit so as to transfer heat between outdoor air, recirculated air, exhaust indoor air, and optionally outdoor air, before mixing them for feeding to the heat pump unit. In addition, the heat transfer element 606 may also comprise a branch outlet for the recirculated air for drawing not all of the recirculated air to back the heat pump but a part of it to the environment through the heat transfer element 606.

The heat transfer element 606 has an inlet for the exhaust air flow $F_e$, an inlet for recirculated air flow $F_r$, and, optionally, for outdoor intake air flow $F_o$. In addition, it comprises at least one outlet through which the exhaust air flow $F_e$, an inlet for recirculated air flow $F_r$, and, optionally, the outdoor intake air flow $F_o$ having passed the heat transfer element is conducted towards the heat pump unit as heat pump air flow $F_p$.

The heat transfer element 606 may contain internal flow channels, through which the flows run and between which temperature differences even out. Thus, the heat transfer cube may supplement or entirely replace the temperature evening element 105 shown in in Figs. 2A and 2B. In addition to evening the temperatures, the element 606 may be configured to affect the magnitudes of the various flows running therein so as to fine-tune the operation of the apparatus.

According to one embodiment, the heat transfer element 606 comprises an additional outlet for recirculation outlet flow $F_{ro}$, which is therefor arranged to bypass the heat pump directly to the outside. The magnitude of the recirculation outlet flow $F_{ro}$ can generally equal to $0 \dots F_r$. Preferably, its magnitude is passively determined in the heat transfer element 606 based on the magnitudes and/or temperatures of the flows $F_e$, $F_r$ and $F_o$ according to predefined criteria, for example for maximizing the COP of the apparatus under prevailing flow and temperature conditions. There may be mechanical passively moving members in the element 606 for adjusting $F_{ro}$ or the desired adjusting can be achieved only by dimensioning of the flow channels within the element 606. Thus, the heat transfer element 606 may act as an entirely passive efficiency control unit.

The flow channels of the heat transfer element are preferably separated by metal plates, and may operate according to the parallel-flow or cross-flow principle or a combination of these. The heat transfer element may for example form an octahedron, such as a cube filled with the flow channels.

It has been found that a heat transfer element placed in front of the heat pump unit can increase the COP and tenability of the apparatus significantly in particular in low outside temperature conditions and when at least one of the flows $F_r$ and $F_o$ is active.

Next, an exemplary control scheme of the apparatus is described.

Let total target pump flow $F_p$ be equal to X units (e.g. X = 2 m³/s).

In a first (classic) state recirculation valve 17A and outdoor air valve 18A are closed, whereby the heat pump flow $F_p$ is formed solely by exhaust air. Thus, $F_e$ and $F_d$ equal to X units and $F_o = F_r = 0$

In a second (recirculation intensive) state, recirculation valve 17A is opened and oudoor air valve 18A stays closed, whereby $F_r$ equals to y units (y < X; e.g. y = 1 m³/s) and $F_e$ and $F_d$ equal to X - y units (1 m³/s). $F_o = 0$.

In a third (outdoor air intensive) state, recirculation valve 17A is closed and outdoor air valve 18A opened, whereby $F_o$ equals to z units (z < X; e.g. z = 1 m³/s) and $F_e$ equals to X - z units (1 m³/s). $F_r = 0$ and $F_d = X$ units (2 m³/s).

The control system is designed such that it is able to adjust the state flexibly between the second and third states such that both the recirculation valve 17A and outdoor air valve 18A may be simultaneously open, and $0 < F_r < X$, $0 < F_o < X$ and $F_e + F_r + F_o = F_p = X$. The control system may have certain boundary conditions implemented, such as $F_e > X/4$, or $F_e > X/2$ and/or $F_p > F_{p,min}$, where $F_{p,min}$ is the minimum flow required through the pump. An algorithm running in the control unit takes into account the boundary conditions and measurement data from the apparatus, and determines optimal values for the various flows. Then, the control system drives the apparatus into a corresponding mode of operation, which uses the flows determined.

According to the invention the control system is adapted to seek the maximum temperature of the total pump flow $F_p$, by changing the proportions of the exhaust flow $F_e$, recirculation flow $F_r$ and outdoor air $F_o$ flow.

*Industrial applicability*

The invention is industrially applicable and provides benefits over known systems, as can be understood through theoretical considerations.

Generally, the mass flow of mixed air through the heat pump is

$$q = q_s + q_u + \beta q$$

where $q_s$ is the mass flow of indoor air, $q_u$ is the mass flow if outdoor air, and $\beta$ is the proportion of air that is recirculated. In terms of heat content, this can be written as

$$cqT = cq_sT_s + cq_uT_u + \beta cqT_j$$

where c is the specific heat capacity of air, $T$ the temperature of mixed air, $T_s$ the temperature of indoor air, $T_u$ the temperature of outdoor air and $T_j$ the temperature of discharge air (in Kelvin units). Thus, the temperature of mixed air is

$$T = \frac{q_sT_s + q_uT_u + \beta qT_j}{q}$$

Assuming that the sum of outdoor air and recirculated air flows is constant, i.e.,

$$q_u + \beta q = k$$
,

it can be shown that

$$T = \frac{q_sT_s + kT_u}{q} + \beta(T_j - T_u)$$
.

The function $T(\beta)$ is thus linear function with the slope $T_j - T_u$. If $T_j > T_u$, the function has a maximum at $\beta = 1 - q_s/q$, whereby $q_u = 0$, i.e., the outside air flow is zero. On the other hand, if $T_j < T_u$, the function has maximum at $\beta = 0$, whereby $q_j = 0$, i.e., the circulated air flow is zero.

Using this simplified model, and assuming that the COP of the heat pump is proportional to the temperature of the air taken in, it can be concluded that the present hybrid apparatus with both outdoor air intake and recirculation allows for choosing optimal mixed air composition in varying circumstances. Thus, with the present apparatus, one can choose a mode of operation, which maximizes the COP of the apparatus.

One can also estimate a threshold value for the outside temperature, below which it is more beneficial to use recirculated air. With normal indoor air temperature and heat pump performance parameters, it can be estimated that the threshold value is typically between -10°C and 0°C. Such predefined threshold value, together with outside air temperature measurement, can be used by the control algorithm for determining the mixing ratio of outside air and recirculated air.

*List of reference numbers*

| 10 | Exhaust air heat pump (EAHP) apparatus |
| 11 | Heat pump |
| 11B | Intake air chamber |
| 11C | Heat pump fan |
| 11D | Seal |
| 12 | Circulation chamber |
| 13 | First inlet channel for exhaust indoor air |
| 13A | Ventilation channel |
| 13B | Collector chamber |
| 14 | Liquid inlet (heating medium) |
| 15 | Outlet channel for discharge air (to outdoors) |
| 15A | Discharge valve |
| 15B | Discharge chamber |
| 15C | Weather shield |
| 16 | Liquid outlet (heating medium) |
| 17 | Recirculation channel |
| 17A | Recirculation valve |
| 17B | Recirculation channel |
| 17C | Recirculation air grate |
| 18 | Inlet channel for outdoor air |
| 18A | Outdoor air intake valve |
| 18B | Outdoor air intake chamber |
| 18C | Weather shield |
| 19 | Heat recovery heat flow |
| 22 | Mixing zone |
| 40 | EAHP apparatus |
| 41 | Building |
| 42 | Apartment/room ventilation channel |
| 43 | Collector ventilation channel |
| 44 | Exhaust air flow |
| 47 | Discharge air flow |
| 48 | Replacement air flow |
| 49 | Apartment / room |
| 101 | Exhaust fan |
| 103 | Mixing chamber |
| 105 | Temperature evening mesh assembly |
| 105A-D | Temperature evening mesh |
| 109 | Insulation |
| 111 | Connectors for liquid circuit |
| 606 | Heat transfer element |
| $F_e$ | Exhaust air flow |
| $F_o$ | Outdoor intake air flow |
| $F_r$ | Recirculation flow |
| $F_r$ | Recirculation outlet flow |
| $F_p$ | Heat pump air flow |
| $F_d$ | Discharge air flow |

**Claims**

1. An exhaust air heat pump apparatus (10, 40), comprising

   - a first inlet channel (13) for exhaust indoor air,
   - an outlet channel (15) for discharge air,
   - a heat pump unit (11) comprising an air intake, for providing a pump flow (Fp) through the heat pump unit (11), connected to the first inlet channel (13) and air output connected to the outlet channel (15), the heat pump unit (11) being capable of recovering heat from or transferring heat to said air intake, whereby said discharge air is produced at the air output,
   - a second inlet channel (18) for outdoor air, the second inlet channel (18) being connected to the air intake of the heat pump unit (11), and
   - a recirculation channel (17) capable of recirculating part of air at the output of the heat pump unit (11) back to the air intake of the heat pump unit (11),

   wherein the apparatus is adapted to mix said outdoor air, said recirculated air or both said outdoor air and said recirculated air with said exhaust indoor air before feeding to the heat pump unit (11), **characterized in that** the heat pump unit (11) comprises a liquid inlet (14) and a liquid outlet (16) and that in the heat pump unit (11) a heat flow (19) is formable from the pump flow (Fp) to a liquid circuit, and **in that** the apparatus further comprises a control system configured to seek the maximum temperature of the pump flow ($F_p$) by changing the proportions of an exhaust air flow ($F_e$), a recirculation flow ($F_r$) and an outdoor intake air flow ($F_o$) and by comprising means for adjusting mixing ratio of said exhaust indoor air, said outdoor air and said recirculated air.

2. The apparatus according to claim 1, **characterized in that** the recirculation channel (17) comprises a first adjustable valve (17A) for controlling the amount of air recirculated to the air intake of the heat pump unit (11) and a second adjustable valve (18A) for controlling the amount of outdoor air provided to the intake of the heat pump unit (11).

3. The apparatus according to claim 2, **characterized by** the control system being functionally connected to said first and second adjustable valves (17A, 18A), the control system being capable to drive the apparatus selectively into a first mode of operation, where only outdoor air is mixed with exhaust air, and into a second mode of operation, where only recirculated air is mixed with exhaust air, and optionally into a third mode of operation, where both outdoor air and recirculated are mixed with exhaust air before feeding to the heat pump unit (11).

4. The apparatus according to any of claims 2-3, **characterized by** comprising

   - one or more temperature and/or air flow sensors associated with said first inlet channel (13), second inlet channel (18) and/or said recirculation channel (17) and
   - the control system configured to control the first and second adjustable valves (17A, 18A) based on measurement data provided by said one or more sensors.

5. The apparatus according to any of the preceding claims, **characterized by** comprising a mixing chamber (103) upstream of the heat pump unit (11), whereby the first and second inlet channels (13, 18) and the recirculation channel (17) are connected to the mixing chamber (22) for carrying out said mixing.

6. The apparatus according to claim 5, **characterized in that** the mixing chamber (103) comprises at least one mesh (105A-D) of metal through which the air is adapted to flow for evening the temperature of air flow fed to the intake of the heat pump unit (11).

7. The apparatus according to any of the preceding claims, **characterized by** comprising a heat transfer element (606) placed upstream of the heat pump unit (11), the heat transfer element (606) being arranged to transfer heat between recirculated air, exhaust indoor air, and optionally outdoor air, before mixing the same for feeding to the heat pump unit (11), the heat transfer element preferably comprising a branch outlet for the recirculated air.

8. The apparatus according to any of the preceding claims, **characterized in that** it is adapted, in at least one mode of operation, to mix outdoor air and/or recirculated air to the mixed air flow such that at least 5 %, for example 5... 50% of the mixed air flow comprises outdoor air and/or recirculated air, in terms of volume flows.

9. The apparatus according to any of the preceding claims, **characterized by** being a decentralized replacement air exhaust air heat pump apparatus, wherein the heat pump unit (11) is adapted to recover said heat to or transferring said heat from a liquid circuit connectable to heat distribution system of a building.

10. The apparatus according to any of the preceding claims, **characterized in that** said heat pump unit (11) is provided with one or more heat pump fans (11C) for conveying air through the heat pump unit (11), and wherein said recirculation of air through the air recirculation channel (17) is adapted to occur solely due to air pressure caused by said heat pump fan(s) (11C).

11. A method of processing exhaust air of a building (41), the method comprising

   - exhausting air from the building to an air mixing zone (22),
   - feeding air from the air mixing zone (22) through a heat pump (11) comprising an air intake and an air output and being adapted to recover heat from or transferring heat to the intake and to provide heated air at the output of the heat pump (11),
   - feeding outdoor air to the air mixing zone (22),
   - recirculating a portion of the cooled air back to the mixing zone (22), and
   - mixing the outdoor air and the recirculated air with the exhausted air in said mixing zone (22) before feeding the mixed air to the heat pump (11),
   - **characterized in that** in the heat pump a heat flow (19) is formable from the pump flow (Fp) to a liquid circuit, and the heat pump comprises a liquid inlet (14) and a liquid outlet (16) and
   - seeking the maximum temperature of the total pump heat flow (Fp) by changing the proportions of an exhaust air flow (Fe), a recirculation flow (Fr) and an outdoor intake air flow (Fo).

12. The method according to claim 11, **characterized in that**

   - said exhausting comprises collecting air from at least ten different rooms (49) of the building (41), and
   - providing at least part of replacement air to said rooms (49) via decentralized replacement air channels, and
   - recovering said heat to or transferring said heat from a heating water or domestic water reservoir of the building.

13. The method according to any of claim 11-12 **characterized by** using an exhaust air heat pump apparatus (10, 40) according to any of claims 1 - 10

**Patentansprüche**

1. Abluft-Wärmepumpenvorrichtung (10, 40), umfassend

   - einen ersten Einlasskanal (13) für Innenraum-Abluft
   - einen Auslasskanal (15) für Austragsluft,
   - eine Wärmepumpeneinheit (11), die einen Lufteinlass zum Bereitstellen eines Pumpstroms (FP) durch die Wärmepumpeneinheit (11), der mit dem ersten Einlasskanal (13) verbunden ist, und einem Luftauslass umfasst, der mit dem Auslasskanal (15) verbunden ist, wobei die Wärmepumpeneinheit (11) in der Lage ist, Wärme von dem Lufteinlass zurückzugewinnen oder an diesen zu übertragen, wodurch die Austragsluft am Luftauslass erzeugt wird,
   - einen zweiten Einlasskanal (18) für Außenluft, wobei der zweite Einlasskanal (18) mit dem Lufteinlass der Wärmepumpeneinheit (11) verbunden ist, und
   - einen Rezirkulationskanal (17), der dazu in der Lage ist, einen Teil der Luft am Ausgang der Wärmepumpeneinheit (11) zurück zum Lufteinlass der Wärmepumpeneinheit (11) zu rezirkulieren,

   wobei die Vorrichtung so eingerichtet ist, dass sie die Außenluft, die rezirkulierte Luft oder sowohl die Außenluft als auch die rezirkulierte Luft mit der Innenraum-Abluft mischt, bevor sie der Wärmepumpeneinheit (11) zugeführt wird **dadurch gekennzeichnet, dass** die Wärmepumpeneinheit (11) einen Flüssigkeitseinlass (14) und einen Flüssigkeitsauslass (16) umfasst und dass in der Wärmepumpeneinheit (11) ein Wärmestrom (19) aus dem Pumpenstrom (Fp) zu einem Flüssigkeitskreislauf bildbar ist, und dass die Vorrichtung weiterhin ein Steuersystem umfasst, das so konfiguriert ist, dass es die Maximaltemperatur des Pumpenstroms ($F_p$) sucht, indem es die Anteile eines Abluftstroms ($F_e$), eines rezirkulierten Luftstroms ($F_r$) und eines Außenluftansaugstroms ($F_o$) ändert und indem sie Mittel zum Einstellen des Mischungsverhältnisses der Innenraum-Abluft, der Außenluft und der rezirkulierten Luft umfasst.

2. Vorrichtung nach Anspruch 1, **dadurch gekennzeichnet, dass** der Rezirkulationskanal (17) ein erstes einstellbares Ventil (17A) zur Steuerung der zum Lufteinlass der Wärmepumpeneinheit (11) rezirkulierten Luftmenge und ein zweites einstellbares Ventil (18A) zur Steuerung der zum Einlass der Wärmepumpeneinheit (11) gelieferten Außenluftmenge umfasst.

3. Vorrichtung nach Anspruch 2, **dadurch gekenn-**

**zeichnet, dass** das Steuersystem funktionell mit dem ersten und dem zweiten einstellbaren Ventil (17A, 18A) verbunden ist, wobei das Steuersystem in der Lage ist, die Vorrichtung selektiv in eine erste Betriebsart zu steuern, in der nur Außenluft mit Abluft gemischt wird, und in eine zweite Betriebsart, in der nur rezirkulierte Luft mit Abluft gemischt wird, und optional in eine dritte Betriebsart, in der sowohl Außenluft als auch rezirkulierte Luft mit Abluft gemischt werden, bevor sie der Wärmepumpeneinheit (11) zugeführt werden.

4. Vorrichtung nach einem der Ansprüche 2-3, **dadurch gekennzeichnet, dass** sie umfasst

   - einen oder mehrere Temperatur- und/oder Luftstromsensoren, die mit dem ersten Einlasskanal (13), dem zweiten Einlasskanal (18) und/oder dem Rezirkulationskanal (17) verbunden sind, und
   - das Steuersystem so konfiguriert ist, dass es das erste und das zweite einstellbare Ventil (17A, 18A) auf der Grundlage von Messdaten steuert, die von dem einen oder den mehreren Sensoren bereitgestellt werden.

5. Vorrichtung nach einem der vorstehenden Ansprüche, **dadurch gekennzeichnet, dass** sie eine Mischkammer (103) stromaufwärts der Wärmepumpeneinheit (11) umfasst, wobei der erste und der zweite Einlasskanal (13, 18) und der Rezirkulationskanal (17) mit der Mischkammer (22) verbunden sind, um die Mischung auszuführen.

6. Vorrichtung nach Anspruch 5, **dadurch gekennzeichnet, dass** die Mischkammer (103) mindestens ein Gitter (105A-D) aus Metall umfasst, durch das die Luft strömen kann, um die Temperatur des dem Einlass der Wärmepumpeneinheit (11) zugeführten Luftstroms abzugleichen.

7. Vorrichtung nach einem der vorstehenden Ansprüche, **dadurch gekennzeichnet, dass** sie ein Wärmeübertragungselement (606) umfasst, das stromaufwärts der Wärmepumpeneinheit (11) angeordnet ist, wobei das Wärmeübertragungselement (606) so angeordnet ist, dass es Wärme zwischen der umgewälzten Luft, der Innenraum-Abluft und optional der Außenluft überträgt, bevor es diese zur Zuführung zur Wärmepumpeneinheit (11) mischt, wobei das Wärmeübertragungselement vorzugsweise einen Abzweigungsauslass für die umgewälzte Luft umfasst.

8. Vorrichtung nach einem der vorstehenden Ansprüche, **dadurch gekennzeichnet, dass** sie dazu eingerichtet ist, in mindestens einer Betriebsart dem Mischluftstrom Außenluft und/oder rezirkulierte Luft beizumischen, so dass mindestens 5 %, beispielsweise 5 ... 50 % des Mischluftstroms bezogen auf die Volumenströme aus Außenluft und/oder rezirkulierter Luft besteht.

9. Vorrichtung nach einem der vorstehenden Ansprüche, **dadurch gekennzeichnet, dass** es sich um eine dezentrale Ersatzluft-Abluft-Wärmepumpenvorrichtung handelt, wobei die Wärmepumpeneinheit (11) zur Rückgewinnung der Wärme an einen Flüssigkeitskreislauf, der an ein Wärmeverteilungssystem eines Gebäudes angeschlossen werden kann, oder zur Übertragung der Wärme von diesem Kreislauf ausgebildet ist.

10. Vorrichtung nach einem der vorstehenden Ansprüche, **dadurch gekennzeichnet, dass** die Wärmepumpeneinheit (11) mit einem oder mehreren Wärmepumpenlüftern (11C) zum Fördern von Luft durch die Wärmepumpeneinheit (11) versehen ist, und wobei die Rezirkulation von Luft durch den Luft-Rezirkulationskanal (17) so angepasst ist, dass sie ausschließlich aufgrund des durch den/die Wärmepumpenlüfter (11C) verursachten Luftdrucks erfolgt.

11. Verfahren zur Verarbeitung von Abluft eines Gebäudes (41), wobei das Verfahren umfasst

- Abführen von Luft aus dem Gebäude zu einer Luftmischzone (22),
- Zuführen von Luft aus der Luftmischzone (22) durch eine Wärmepumpe (11), die einen Lufteinlass und einen Luftauslass aufweist und so eingerichtet ist, dass sie Wärme aus der Übertragung von Wärme auf den Einlass zurückgewinnt und erwärmte Luft am Ausgang der Wärmepumpe (11) bereitstellt,
- Zuführen von Außenluft in die Luftmischzone (22),
- Rezirkulieren eines Teils der gekühlten Luft zurück in die Mischzone (22), und
- Mischen der Außenluft und der rezirkulierten Luft mit der Abluft in der Mischzone (22), bevor die gemischte Luft der Wärmepumpe (11) zugeführt wird,
- **dadurch gekennzeichnet, dass** in der Wärmepumpe ein Wärmestrom (19) aus dem Pumpenstrom (Fp) zu einem Flüssigkeitskreislauf bildbar ist, und die Wärmepumpe einen Flüssigkeitseinlass (14) und einen Flüssigkeitsauslass (16) aufweist, und
- Suchen der maximalen Temperatur des gesamten Pumpenwärmestroms (Fp) durch Ändern der Anteile eines Abluftstroms (Fe), eines Rezirkulationsstroms (Fr) und eines Außenluftstroms (Fo).

12. Verfahren nach Anspruch 11, **dadurch gekenn-**

**zeichnet, dass**

- das Absaugen das Sammeln von Luft aus mindestens zehn verschiedenen Räumen (49) des Gebäudes (41) umfasst, und
- Bereitstellen zumindest eines Teils der Ersatzluft für die Räume (49) über dezentrale Ersatzluftkanäle, und
- Rückgewinnen der Wärme an oder Übertragen der Wärme von einem Heizwasser- oder Brauchwasserspeicher des Gebäudes.

13. Verfahren nach einem der Ansprüche 11 - 12, **gekennzeichnet durch** die Verwendung einer Abluft-Wärmepumpenvorrichtung (10, 40) nach einem der Ansprüche 1-10.

## Revendications

1. Appareil de pompe à chaleur d'air d'échappement (10, 40), comprenant

- un premier canal d'entrée (13) pour de l'air intérieur d'échappement,
- un canal de sortie (15) pour de l'air de décharge,
- une unité de pompe à chaleur (11) comprenant une admission d'air, pour fournir un débit de pompe (Fp) à travers l'unité de pompe à chaleur (11), raccordée au premier canal d'entrée (13) et une sortie d'air raccordée au canal de sortie (15), l'unité de pompe à chaleur (11) étant capable de récupérer de la chaleur de ou de transférer de la chaleur à ladite admission d'air, selon lequel ledit air de décharge est produit au niveau de la sortie d'air,
- un second canal d'entrée (18) pour de l'air extérieur, le second canal d'entrée (18) étant raccordé à l'admission d'air de l'unité de pompe à chaleur (11), et
- un canal de recirculation (17) capable de faire recirculer une partie d'air au niveau de la sortie de l'unité de pompe à chaleur (11) en retour vers l'admission d'air de l'unité de pompe à chaleur (11),

dans lequel l'appareil est adapté pour mélanger ledit air extérieur, ledit air recirculé ou à la fois ledit air extérieur et ledit air recirculé avec ledit air intérieur d'échappement avant de le fournir à l'unité de pompe à chaleur (11),
**caractérisé en ce que** l'unité de pompe à chaleur (11) comprend une entrée de liquide (14) et une sortie de liquide (16) et **en ce que**, dans l'unité de pompe à chaleur (11), un débit de chaleur (19) peut se former depuis le débit de pompe (Fp) vers un circuit de liquide, et **en ce que** l'appareil comprend en outre un système de commande configuré pour rechercher la température maximale du débit de pompe ($F_p$) en changeant les proportions d'un débit d'air d'échappement ($F_e$), d'un débit de recirculation ($F_r$) et d'un débit d'air d'admission extérieur ($F_o$) et en comprenant un moyen pour ajuster un rapport de mélange dudit air intérieur d'échappement, dudit air extérieur et dudit air recirculé.

**2.** Appareil selon la revendication 1, **caractérisé en ce que** le canal de recirculation (17) comprend une première soupape ajustable (17A) pour commander la quantité d'air recirculé vers l'admission d'air de l'unité de pompe à chaleur (11) et une seconde soupape ajustable (18A) pour commander la quantité d'air extérieur fourni à l'admission de l'unité de pompe à chaleur (11).

**3.** Appareil selon la revendication 2, **caractérisé par** le système de commande étant raccordé de manière fonctionnelle auxdites première et seconde soupapes ajustables (17A, 18A), le système de commande étant capable d'entraîner l'appareil sélectivement dans un premier mode de fonctionnement, où uniquement de l'air extérieur est mélangé avec de l'air d'échappement, et dans un deuxième mode de fonctionnement, où uniquement de l'air recirculé est mélangé avec de l'air d'échappement, et facultativement dans un troisième mode de fonctionnement, où à la fois de l'air extérieur et de l'air recirculé sont mélangés avec de l'air d'échappement avant de le fournir à l'unité de pompe à chaleur (11).

**4.** Appareil selon l'une quelconque des revendications 2-3, **caractérisé en ce qu'**il comprend

   - un ou plusieurs capteurs de température et/ou de débit d'air associés audit premier canal d'entrée (13), au second canal d'entrée (18) et/ou audit canal de recirculation (17) et
   - le système de commande configuré pour commander les première et seconde soupapes ajustables (17A, 18A) sur la base de données de mesure fournies par lesdits un ou plusieurs capteurs.

**5.** Appareil selon l'une quelconque des revendications précédentes, **caractérisé en ce qu'**il comprend une chambre de mélange (103) en amont de l'unité de pompe à chaleur (11), selon lequel les premier et second canaux d'entrée (13, 18) et le canal de recirculation (17) sont raccordés à la chambre de mélange (22) pour effectuer ledit mélange.

**6.** Appareil selon la revendication 5, **caractérisé en ce que** la chambre de mélange (103) comprend au moins un maillage (105A-D) métallique à travers lequel l'air est adapté pour circuler pour égaliser la température de débit d'air fourni à l'admission de l'unité de pompe à chaleur (11).

**7.** Appareil selon l'une quelconque des revendications précédentes, **caractérisé en ce qu'**il comprend un élément de transfert de chaleur (606) placé en amont de l'unité de pompe à chaleur (11), l'élément de transfert de chaleur (606) étant agencé pour transférer de la chaleur entre de l'air recirculé, de l'air intérieur d'échappement, et facultativement de l'air extérieur, avant de mélanger ceux-ci pour les fournir à l'unité de pompe à chaleur (11), l'élément de transfert de chaleur comprenant de préférence une sortie ramifiée pour l'air recirculé.

**8.** Appareil selon l'une quelconque des revendications précédentes, **caractérisé en ce qu'**il est adapté, dans au moins un mode de fonctionnement, pour mélanger de l'air extérieur et/ou de l'air recirculé au débit d'air mélangé de sorte qu'au moins 5 %, par exemple 5 ... 50% du débit d'air mélangé comprennent de l'air extérieur et/ou de l'air recirculé, en termes de débits volumétriques.

**9.** Appareil selon l'une quelconque des revendications précédentes, **caractérisé en ce qu'**il est un appareil de pompe à chaleur d'air d'échappement d'air de remplacement décentralisé, dans lequel l'unité de pompe à chaleur (11) est adaptée pour récupérer ladite chaleur de ou transférer ladite chaleur depuis un circuit de liquide pouvant être raccordé à un système de distribution de chaleur d'un bâtiment.

**10.** Appareil selon l'une quelconque des revendications précédentes, **caractérisé en ce que** ladite unité de pompe à chaleur (11) est pourvue d'un ou plusieurs ventilateurs de pompe à chaleur (11C) pour transporter de l'air à travers l'unité de pompe à chaleur (11), et dans lequel ladite recirculation d'air à travers le canal de recirculation d'air (17) est adaptée pour se produire uniquement en raison d'une pression d'air provoquée par le(s)dit(s) ventilateur(s) de pompe à chaleur (11C).

**11.** Procédé de traitement d'air d'échappement d'un bâtiment (41), le procédé comprenant les étapes consistant à

   - faire s'échapper de l'air du bâtiment vers une zone de mélange d'air (22),
   - fournir de l'air depuis la zone de mélange d'air (22) à travers une pompe à chaleur (11) comprenant une admission d'air et une sortie d'air et étant adaptée pour récupérer de la chaleur de ou transférer de la chaleur vers l'admission et pour fournir de l'air chauffé au niveau de la sortie de la pompe à chaleur (11),
   - fournir de l'air extérieur à la zone de mélange d'air (22),

- faire recirculer une portion de l'air refroidi en retour vers la zone de mélange (22), et

- mélanger l'air extérieur et l'air recirculé avec l'air échappé dans ladite zone de mélange (22) avant de fournir l'air mélangé à la pompe à chaleur (11),

- **caractérisé en ce que**, dans la pompe à chaleur, un débit de chaleur (19) peut se former depuis le débit de pompe (Fp) vers un circuit de liquide, et la pompe à chaleur comprend une entrée de liquide (14) et une sortie de liquide (16) et

- rechercher la température maximale du débit de chaleur de pompe total (Fp) en changeant les proportions d'un débit d'air d'échappement (Fe), d'un débit de recirculation (Fr) et d'un débit d'air d'admission extérieur (Fo).

12. Procédé selon la revendication 11, **caractérisé en ce que**

- ladite étape d'échappement comprend l'étape de collecte d'air depuis au moins dix pièces différentes (49) du bâtiment (41), et

- fournir au moins une partie d'air de remplacement auxdites pièces (49) par l'intermédiaire de canaux d'air de remplacement décentralisés, et

- récupérer ladite chaleur de ou transférer ladite chaleur depuis un réservoir d'eau de chauffage ou d'eau sanitaire du bâtiment.

13. Procédé selon l'une quelconque de la revendication 11-12, **caractérisé en ce qu'**il utilise un appareil de pompe à chaleur d'air d'échappement (10, 40) selon l'une quelconque des revendications 1-10.

Fig. 1

Fig. 2A

10

11D

15B

15A

12

111

11A

11B

103

105

101

17C

18A

18B

Fig. 2B

Fig. 3A

Fig. 3B

Fig. 4

| Start heat recovery | 50 |

↓

| Monitor air flows | 52 |

↓

| Adjust recirculation and/or outdoor air intake based on monitoring | 54 |

Fig. 5

Fig. 6

EP 3 296 658 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011077007 A
- CA 2736085
- DE 112014000527
- DE 112014001194
- EP 2306107 A